# EUROPÄISCHE PATENTSCHRIFT

(11) **EP 1 516 860 B1**
(45) Veröffentlichungstag und Bekanntmachung des Hinweises auf die Patenterteilung: **06.11.2019**
(21) Anmeldenummer: 04022368.7
(22) Anmeldetag: 20.09.2004
(51) Int. Cl.: C03B 37/028, C03B 37/027

(54) **Vorrichtung und Verfahren zum Herstellen von Glasfasern**
Apparatus and method for the production of glass fibres
Dispositif et procédé de fabrication de fibres de verre

(30) Priorität: 22.09.2003 DE 10344205
(43) Veröffentlichungstag der Anmeldung: 23.03.2005
(73) Patentinhaber: Schott AG, 55122 Mainz (DE)
(72) Erfinder: Eis, Wolfgang, 65527 Niedernhausen (DE); Willmes, Lothar, 65375 Hallgarten (DE)
(74) Vertreter: Schweiger, Martin

(56) Entgegenhaltungen:
- WO-A-02/102578
- US-A- 3 193 363
- US-A- 4 373 943

## Beschreibung

Die Erfindung betrifft eine Vorrichtung zum Herstellen von optischen Glasfasern aus Preformen, insbesondere von Mehrkomponentenglasfasern, mit einem Heizbuchsen aufweisenden Faserofen, mit einer Nachführvorrichtung zum Halten und Nachführen der Preformen in den Heizbuchsen und einer Zieh- und Beschlichtungsanlage zum Weiterführen der Glasfasern an eine Konfektioniervorrichtung.

Des Weiteren ist von der Erfindung ein Verfahren zum Herstellen von Glasfasern aus Preformen umfasst, wobei die Preformen mit einer Nachführvorrichtung in die Heizbuchsen des Faserofens eingeführt werden und wobei die aus den Heizbuchsen gezogenen Glasfasern über eine nachgeordnete Kühlstrecke gekühlt und über eine Ziehanlage zu einer Konfektioniervorrichtung weitergeführt werden.

Vorrichtungen und Verfahren zum Herstellen von Glasfasern dieser Art sind im Stand der Technik bekannt. Dabei werden Preformen in Heizbuchsen eingeführt und geschmolzen. Das Glas fließt von dem Preformen kontinuierlich ab und wird unterhalb des Faserofens aus den Heizbuchsen gezogen.

Preformen bestehen zumindest aus einem Stab eines bestimmten Glasmaterials mit einem vorbestimmten Durchmesser. Insbesondere für den Einsatz von Mehrkomponentenglasfasern in Glasfaserbündeln ist es jedoch erforderlich, dass die Glasfasern eine bestimmte Qualität hinsichtlich des Durchmessers jeder Glasfaser beziehungsweise der Durchmesservarianz mehrerer gleichzeitig hergestellter Glasfasern aufweisen, wobei eine optimale Reflexionsfähigkeit für das durch die Glasfaser geleitete Licht notwendig ist. Diese Eigenschaften werden bei Mehrkomponentenglasfasern durch mehrschichtige Preformen erzielt, welche einen Kernstab und zum Beispiel ein Mantelrohr umfassen. Die daraus gezogenen Glasfasern weisen einen Kern und einen damit verbundenen Mantel auf. Dabei werden die hohen Reflexionseigenschaften durch den Mantel erzeugt, welcher eine bestimmte Brechungszahl aufweist. Der Kernstab besteht aus einem Material mit einer höheren Brechzahl als die des Mantelmaterials, um die lichtleitenden und optischen Eigenschaften zu gewährleisten.

Beim Schmelzen der Preform wird mit dem Abtropfen des ersten Glastropfens das Mantelmaterial über das Kernmaterial gezogen und die beiden Materialien vereinigen sich.

Um die Materialstärken konstant zu halten und optimale optische Eigenschaften der unterschiedlichen Materialien in den Glasfasern zu erzeugen, ist es erforderlich, dass die Durchmesser der Glasfasern konstant gehalten werden. Darüber hinaus sind die Temperaturverläufe im Faserofen von entscheidender Bedeutung für die optischen und mechanischen Eigenschaften der daraus entstehenden Glasfasern.

Hierzu werden im Stand der Technik Herstellungsweisen unterschieden, welche im Wesentlichen von der Art und Qualität der zu erzeugenden Glasfasern beziehungsweise der Geschwindigkeit der Fasererzeugung und der Anzahl der gleichzeitig herzustellenden Glasfasern abhängen.

Aus der US 2003/0079501 A1 ist eine Mehrfachziehanlage für Glasfasern bekannt, welche aus einschichtigen Preformen gezogen werden. Diese Preformen bestehen in der Regel aus Quarzglas, welches bei 2000 °C in einem Ziehofen geschmolzen wird. Aus dem Ziehofen wird eine Faser abgezogen, deren Durchmesser in einem Ziehturm mit entsprechenden Mitteln hinsichtlich der Genauigkeit geprüft beziehungsweise vermessen und anschließend mit einem Polymermaterial beschichtet wird. Danach wird die Faser auf einer Aufwickelspule aufgewickelt. Die so hergestellten Fasern aus Quarzglas werden in der Telekommunikationstechnik beziehungsweise für die Datenübertragung verwendet.

Sie werden wegen der erhöhten Anforderungen an die Durchmessergenauigkeit und wegen der damit notwendig werdenden Prüfmaßnahmen stets einzeln gezogen und nach dem Ziehofen auch einzeln nachverarbeitet. Die Verbesserungen, welche mit der US 2003/0079501 A1 erkannt wurden, bestehen gegenüber der bekannten Einzelfaserherstellung darin, mehrere gesondert für sich arbeitende Vorrichtungen zur Erzeugung von Einzelfasern parallel zu schalten, um eine dementsprechende Anzahl von Glasfasern gleichzeitig herstellen zu können.

Diese Herstellungsweise ist für die Erzeugung von Mehrkomponentenglasfasern ungeeignet, da meist eine Vielzahl von Glasfasern in Glasfaserbündeln verwendet werden, welche hinsichtlich der Durchmessergenauigkeit und der Beschichtung andere Anforderungen zu erfüllen haben. Es hat sich erwiesen, dass eine wirtschaftliche Herstellung derartiger Glasfaserbündel mit Einzelfaserziehvorrichtungen, auch wenn sie zu mehreren parallelgeschaltet sind, nicht möglich ist.

Insbesondere hat sich als Nachteil solcher Vorrichtungen erwiesen, dass trotz Parallelschaltung von mehreren Einzelfaserziehanlagen die Anzahl der Glasfasern erheblich unter dem Notwendigen begrenzt bleibt. Zur wirtschaftlichen Herstellung von Glasfaserbündeln sollten eine Vielzahl von Einzelfasern gleichzeitig hergestellt werden können. Auch ist die auf die Einzelfaser bezogene Nachverarbeitung bei der Vorrichtung nach dem Stand der Technik mit erheblichen Kosten verbunden, so dass eine Erzeugung von Faserbündeln für optische Systeme damit unwirtschaftlich wäre.

Gegenüber den für die Datenübertragung verwendeten Glasfasern kommt es bei Mehrkomponentenglasfasern weniger auf die Qualität der Einzelfasern als auf die des gesamten Faserbündels an. Daneben spielen, anders als bei Datenübertragungsfasern, für die Verwendung von Glasfaserbündel aus Mehrkomponentenglasfasern Wirtschaftlichkeitserwägungen eine wesentlich größere Rolle. Es hat sich gezeigt, dass bei Einzelführung der Glasfasern, wie im vorgenannten Stand der Technik dargestellt, diese Anforderungen nicht gewährleistet werden können.

In der Druckschrift US 4,373,943 wird eine Vorrichtung zur Formung mehrerer Fasern offenbart, mit welcher Glasfasern gleichzeitig in einem Prozess herstellbar sowie weiterverarbeitbar sind. Dabei offenbart der Stand der Technik eine Vorrichtung, welche eine Schmelz-, Zieh- und Konfektioniervorrichtung umfasst. Die Schmelzanlage weist einen Faserofen auf. Der Faserofen hat Öffnungen, in welche Preformen einführbar sind. Die Vorrichtung nach dem Stand der Technik weist des Weiteren eine Nachführvorrichtung auf, zum Halten und Nachführen der Preformen und einer Ziehanlage zum Weiterführen der Glasfasern sowie eine Konfektioniervorrichtung. Preformen werden in den Faserofen eingeführt, wobei der Faserofen zentral beheizt wird. Die Anordnung von einer Anzahl von N Öffnungen erfolgt axialsymmetrisch zu einer zentralen Achse oder auch linear.

Nachteil dieses Standes der Technik ist, dass bei Verwendung von mehr als N=4 Heizbuchsen eine axialsymmetrische Anordnung zu einer kreisförmigen Vorrichtung führt, da die Öffnungen zentral um die Achse verteilt sind. Bei einer linearen Anordnung sind die Öffnungen gerade nebeneinander (d.h. auf einer Geraden) angeordnet. Beides ist nachteilig, da diese Anordnungen zu erheblichen Platzbedarf führen. Außerdem zeigt der Stand der Technik einen zentralen Heizofen auf, der in beiden gezeigten Anordnungen einen Temperaturgradienten aufweist, so dass die Fasern bei größerer Anzahl nicht mit derselben Temperatur gezogen würden, was zu unterschiedlicher Qualität der Fasern führt. Das Ergebnis einer solchen Herstellungsweise sind Faserbündel, welchen homogene Abbildungseigenschaften der Einzelfasern fehlen, so dass es zu unvorhergesehenen Abbildungsfehlern bei der Signalübertragung durch ein solches Faserbündel kommen kann.

Außerdem wird im Stand der Technik offenbart, dass die Faserbündel tangential zur Ziehvorrichtung herausgeführt werden. In Zusammenhang mit der axialsymmetrischen Anordnung mit NxN Öffnungen sind dazu weitere Umlenkmittel nötig, die eine Umlenkung von einzelnen Glasfasern erzeugen müssen, damit die ursprünglich zylindrisch angeordneten Fasern in ein Band überführt werden können. Solche Umlenkmittel führen zu ungünstigem Transport der Fasern, womit das Zusammenführen zu einem bandförmigen Faserbündel erschwert wird, was Voraussetzung für eine gleichmäßige Weiterverarbeitung in einer Beschlichtungsanlage ist.

Aufgabe der Erfindung ist es daher, die Nachteile des Standes der Technik zu vermeiden und eine Vorrichtung sowie ein Verfahren zum Herstellen optischer Glasfasern bereitzustellen, mit welchen die vorbeschriebenen Qualitätsanforderungen erfüllt werden können, und mit denen eine ausreichende Anzahl an Glasfasern, vorzugsweise aus mehrschichtigen Preformen, gleichzeitig herstellbar ist.

Eine Lösung der Aufgabe wird durch die Hauptansprüche, erfindungsgemäße Weiterbildungen und Ausgestaltungen der Vorrichtung beziehungsweise des Verfahrens durch die Unteransprüche zur Verfügung gestellt.

Es ist dabei erfindungsgemäß vorgesehen, dass die Heizbuchsen im Faserofen eine matrixartige Anordnung zur gleichzeitigen Aufnahme mehrerer Preformen aufweisen, dass die Matrixhauptachsen der Anordnung mit einem vorbestimmten Versatzwinkel (α) zueinander angeordnet sind, dass der Versatzwinkel der Matrixachsen α < 90° ist und dass die aus den Heizbuchsen gezogenen Glasfasern bandförmig nebeneinander liegend von der Zieh- und Beschlichtungsanlage aufnehmbar sind.

Die Anordnung der Heizbuchsen gewährleistet dabei, dass die Glasfasern mit einem kleinen Versatzabstand zueinander aus dem Faserofen gezogen werden können. Dabei ist es möglich, die Glasfasern dementsprechend auf einer nachgeordneten Walze umzulenken.

Der Versatz der Glasfasern wird dadurch erreicht, dass die Matrixhauptachsen mit einem vorbestimmten Versatzwinkel zueinander angeordnet sind. Hierzu ist in vorteilhafter Weise vorgesehen, dass die Heizbuchsen im Faserofen rautenförmig angeordnet sind. Dabei ist weiter vorgesehen, dass der Abstand zwischen den unmittelbar benachbarten Heizbuchsen auf jeder Matrixachse gleich ist. Des Weiteren ist vorgesehen, dass die Heizbuchsen in einer Ebene angeordnet sind.

Mit der erfindungsgemäßen Vorrichtung können eine Vielzahl von Preformen synchron durch die Heizbuchsen geführt und die im Faserofen hergestellten Glasfasern mit einer vorgegebenen Ziehgeschwindigkeit aus den in den Heizbuchsen befindlichen Preformen gezogen werden. Dabei ist erfindungsgemäß vorgesehen, dass die Glasfasern auf wenigstens einer nachgeordneten Umlenkwalze, ohne sich zu berühren und zu kreuzen, umgelenkt werden. Somit werden die Glasfasern in ihrer Gesamtheit mit gleicher Ziehgeschwindigkeit aus den Heizbuchsen des Faserofens gezogen.

Dadurch, dass jeder von der Nachführvorrichtung geführten Preform eine Heizbuchse zugeordnet ist, wird ein gleichzeitiges Ziehen von Glasfasern aus allen Preformen ermöglicht.

Eine vorteilhafte Ausgestaltung der Vorrichtung wird erfindungsgemäß dadurch zur Verfügung gestellt, dass der Faserofen eine Anzahl von wenigstens 110 Heizbuchsen aufweist. Dabei ist eine günstige Anordnung dadurch erreichbar, dass die Matrixstruktur 10 Heizbuchsen in Richtung der einen Matrixhauptachse und 11 Heizbuchsen in Richtung der anderen Matrixhauptachse aufweist. Es hat sich nämlich erwiesen, dass eine vorteilhafte Ausnutzung der Heizleistung aller Heizbuchsen mit einer größeren Anzahl an Heizbuchsen besser optimiert werden kann. Dabei werden ungewünschte Temperaturschwankungen bereits konstruktiv gering gehalten. Bei dieser Ausführungsform werden die Glasfasern von jeweils einer Hälfte des Faserofens auf je eine Umlenkrolle und jeweils zu einer Beschlichtungsanlage geführt.

Um das gewünschte und erforderliche Temperaturprofil zu gewährleisten, ist vorgesehen, dass der Faserofen eine Temperaturregelung aufweist und dass die Temperaturregelung Einzelregelungen der Heizbuchseninnentemperatur umfasst. Somit können über die Temperaturregelung sowohl die Gesamttemperatur als auch die Temperaturen der einzelnen Heizbuchsen kontrolliert und geregelt werden. Dies ermöglicht, eine individuelle Anpassung des Temperaturprofils an äußere und innere Einflussfaktoren.

Um die Temperaturen jeweils zu ermitteln und die Temperaturen der einzelnen Heizbuchsen einzeln zu verändern, wird erfindungsgemäß vorgeschlagen, dass die Einzelregelungen Mess- und Ausgleichsmittel zum Abstimmen der Temperaturen der Heizbuchsen relativ zu den benachbarten Heizbuchsen aufweisen. Hierzu sind Sensoren innerhalb der Heizbuchsen vorgesehen, welche mit der Temperaturregelung verbunden sind. Mittels der Sensorwerte werden die Temperaturen der einzelnen Heizbuchsen geregelt. Alle Heizbuchsen werden auf einen Sollwert geheizt, welcher im Bereich zwischen etwa 800°C und 1100°C liegt. Mit der Einzelregelung kann somit in vorteilhafter Weise erreicht werden, dass alle Heizbuchsen individuell auf den Sollwert geregelt werden. Störgrößen, welche bewirken, dass die Heizbuchsen untereinander und insgesamt vom Sollwert abweichende Temperaturen aufweisen, werden durch jeweilige Offseteinstellungen ausgeglichen. Alle Heizbuchsen werden dabei auf den gleichen Sollwert innerhalb eines Temperaturbands von etwa 1°C geregelt. Um Temperaturdifferenzen zwischen den Heizbuchsen untereinander auszugleichen, wird in regelmäßigen Abständen für jede Heizbuchse die Temperaturdifferenz aufgenommen und der ermittelte Wert vom Offset abgezogen oder ihm zugerechnet. Somit können Langzeiteffekte, wie Alterung der Thermoelemente und Heizbuchsen oder sonstige Störgrößen von außerhalb der Heizbuchsen, ebenfalls durch die Offseteinstellung ausgeglichen werden. Die Ausgleichsmittel umfassen Heiz- als auch Kühlelemente, beispielsweise elektronische Bauelemente, mit welchen in den Heizbuchsen je nach Bedarf die Temperaturen erhöht oder gesenkt werden können. In vorteilhafter Weise ist es somit möglich, definierte Zustände der Heizbuchsen und somit des Gesamtsystems des Faserofens einzustellen.

Des Weiteren wird erfindungsgemäß vorgeschlagen, dass jede Heizbuchse zumindest ein Heizelement, vorzugsweise mehrere gesondert ansteuerbare Heizwendeln, aufweist und dass zwischen dem Heizelement und der Preform zumindest ein Diffusor zum Streuen der Heizstrahlung angeordnet ist. Vorteil dieser Ausführungsform ist es, dass mit mehreren Heizwendeln zum einen ein genau berechnetes Temperaturprofil in der Heizbuchse eingestellt werden kann. Zum anderen werden steile Temperaturgefälle durch den Diffusor geglättet. Dabei ist vorgesehen, dass der Diffusor vorzugsweise ein Quarzrohr umfasst und dass die Preform von der Nachführvorrichtung durch das Quarzglas führbar ist.

Innerhalb der Heizbuchse, aber besonders innerhalb des Quarzrohres, können sich ungewünschte Strömungsbedingungen ergeben, welche dazu führen, dass die Preform mit kalter Luft beaufschlagt wird. Um dies zu vermeiden wird erfindungsgemäß vorgeschlagen, dass jede Heizbuchse Strömungsmittel zur Erzeugung einer laminaren Luftströmung in der Heizbuchse aufweist. Hierdurch ist es möglich, in vorteilhafter Weise vorberechnete Strömungsbedingungen einzustellen. Dabei ist vorgesehen, dass die Strömungsmittel eine vorzugsweise einstückig mit dem Diffusor verbundene im unteren Teil der Heizbuchse angeordnete Verlängerung umfassen, welche frei von Heizelementen ist. Dies bewirkt, dass sich unter der Heizbuchse ein Luftpuffer bilden kann, welches durch die Heizstrahlung aufgeheizt wird. Die aufgeheizte Luft wird in die Heizbuchse geleitet. Damit die Strömungsgeschwindigkeit der eingeleiteten Luft nicht ungewünscht dabei zunimmt, ist erfindungsgemäß vorgesehen, dass die Strömungsmittel zumindest eine Strömungsblende am oberen Ende der Heizbuchsen umfassen, welche für den Luftabzug einen Ringspalt mit vorbestimmter Spaltbreite um die Preformen gewährleistet. Durch die Strömungsblende ist es möglich, die Laminargeschwindigkeit der Luftströmung durch Festlegung des Ringspalts im oberen Bereich der Heizbuchse zu beeinflussen. Es ist auch möglich, mehrere Strömungsblenden mit unterschiedlichen, auf die jeweils abzudeckenden Ringspalte abgestimmte Außendurchmesser zu verwenden. Es kann somit in einfacher Weise der Ringspalt an verschiedene Durchmesser von Preformen angepasst oder auf Änderungen der Strömungsbedingungen in einer Heizbuchse während des Ziehprozesses reagiert werden. Dabei ist mit einer vorteilhaften Ausführungsform vorgesehen, dass die Heizbuchsen im gesamten Faserofen die gleichen Ringspalte aufweisen.

Erfindungsgemäß wird weiter vorgeschlagen, dass die Nachführvorrichtung eine Tragscheibe mit Einzelaufhängungen zur Aufnahme der einzelnen Preformen aufweist. Damit kann jede Preform einzeln aufgehängt werden. Bei geringer Anzahl von herzustellenden Glasfasern können dabei einzelne Einzelaufhängungen auch unbestückt bleiben.

Es ist außerdem in vorteilhafter Weise vorgesehen, dass die Einzelaufhängungen an der Tragscheibe eine mit der Heizbuchsenanordnung korrespondierende matrixartige Anordnung aufweisen. Dadurch wird es möglich, dass die Preformen achssymmetrisch zu den Achsen der Heizbuchsen einführbar sind und Abweichungen des Randabstandes der Preformen zu jeweils ihrer Heizbuchse vermieden werden.

In vorteilhafter Weise wird das Zusammenschmelzen des Mantel- und Kernmaterials dadurch verbessert, dass jede Einzelaufhängung einen Vakuumanschluss zur Verbindung der Preform an ein zentrales Vakuumsystem aufweist. Das Vakuum zieht dabei die zwischen den Materialien befindliche Luft ab, so dass Lufteinschlüsse zwischen den Schichten vermieden werden können.

Um einen synchronen Vorschub aller in der Tragscheibe angeordneten Preformen und damit eine zuverlässige Herstellung von weitgehend identischen Faserdurchmessern zu erreichen, wird erfindungsgemäß vorgeschlagen, dass die Tragscheibe für den Vorschub der Preformen mittels Gewindespindel und Führung von einem Getriebemotor antreibbar und bremsbar ist.

Dabei ist vorgesehen, dass die Tragscheibe manuell und/oder automatisch in eine Bedienposition verfahrbar ist, so dass die Tragscheibe nach dem Ziehvorgang schnell in ihre Bedienposition zurückfahrbar ist.

Es ist des Weiteren erfindungsgemäß vorgesehen, dass der Faserofen einen Strömungskragen am ausgangsseitigen Ende der Heizbuchsen aufweist, mittels dem ein Luftpuffer für die verzögerte Abkühlung der Glasfasern erzeugbar ist. Es hat sich dabei in vorteilhafter Weise erwiesen, dass mit diesem Strömungskragen gezielte Abkühlprofile für die Glasfasern erreichbar sind.

Erfindungsgemäß ist vorgesehen, dass dem Faserofen eine Kühlstrecke zum Kühlen der Glasfasern nachgeordnet ist. Als vorteilhaft hat sich dabei erwiesen, dass die Kühlstrecke einen Trichter aufweist, durch den die Glasfasern zur Zieh- und Beschlichtungsanlage führbar sind. Der Trichter ist dem Faserofen nachgeordnet und unterhalb des Strömungskragens in der Kühlstrecke positioniert, so dass beim Einrichten der Vorrichtung, die ersten geschmolzenen Glastropfen der Preformen gezielt zum Einrichtungsplatz an der Zieh- und Beschlichtungsanlage führbar sind. Die Glastropfen treffen beim Herunterfallen auf den Trichter und rutschen mit der nachfolgenden Glasfaser durch den Trichter zur Zieh- und Beschlichtungsanlage, wo sie vorzugsweise manuell aufgenommen und in der Beschlichtungsanlage auf Schlichtewalzen aufgelegt werden können.

Es hat sich dabei als vorteilhaft erwiesen, dass die Glasfasern jeder Ofenhälfte über je eine Schlichtewalze führbar sind. Somit wird erreicht, dass eine große Anzahl an Glasfasern gleichzeitig hergestellt und weiterverarbeitet werden kann. Die Glasfasern werden dabei jeweils um die entsprechende Schlichtewalze geführt, bandförmig nebeneinander angeordnet und gleichmäßig mit Schlichtemittel versehen. Dabei ist vorgesehen, dass sich die Glasfasern nicht berühren.

Eine weitere vorteilhafte Ausgestaltung der Vorrichtung wird dadurch erreicht, dass die Schlichtewalzen in einem vorbestimmten Winkel zu den Matrixhauptachsen angeordnet sind. Somit wird die Einrichtung der Vorrichtung beim Ziehbeginn erleichtert und weiterhin erreicht, dass die Glasfasern ausreichend Abstand voneinander haben, während sie beschlichtet werden.

Das erfindungsgemäße Verfahren ist dadurch gekennzeichnet, dass die Glasfasern mit einem vorbestimmten gleichbleibenden Durchmesser aus den Heizbuchsen gezogen und über die Kühlstrecke in vorbestimmter Weise gekühlt werden und dass mittels Anordnung der Heizbuchsen ein berührungs- und kreuzungsfreies Ziehen der Glasfasern gewährleistet wird. Die Glasfasern werden hierzu mit gleichbleibender Ziehgeschwindigkeit aus den Heizbuchsen gezogen. Die optischen Anforderungen an das Glasmaterial der Glasfasern und die physikalischen Eigenschaften der damit erzeugten Faserbündel werden dadurch in ausreichender Weise gewährleistet, dass Schwankungen der Ziehgeschwindigkeit an den einzelnen Glasfasern vermieden werden. Dabei wird gemäß dem Masseflussgesetz das Verhältnis der Masse des geschmolzenen Glasmaterials und der Masse des als Glasfaser abgezogenen Glasmaterials konstant gehalten.
Dies wird dadurch erreicht, dass jede Preform mit einem geregelten Temperaturprofil in der zugeordneten Heizbuchse und/oder Vorschub der Tragscheibe gezogen wird. Des Weiteren wird vorgeschlagen, dass die aus den Heizbuchsen gezogenen Glasfasern über ein vorbestimmtes Temperaturprofil gekühlt werden.

Dabei sorgt erfindungsgemäß die spezielle geometrische Anordnung der Heizbuchsen dafür, dass die Glasfasern ohne sich gegenseitig zu berühren oder miteinander gekreuzt zu werden, aus dem Faserofen gezogen und über die Kühlstrecke geführt werden können. Des Weiteren ist es somit nach der Kühlstrecke möglich, dass die Glasfasern bandartig auf den nachgeordneten Schlichtewalzen einer Beschlichtungsanlage gleichmäßig mit Schlichtemittel benetzt werden.

Das Ziehen der Glasfasern wird dadurch vorgenommen, dass die Glasfasern von einer Abziehwalze mit gleicher Ziehgeschwindigkeit gezogen werden. Dabei liegen die Glasfasern wie bereits auf den Schlichtewalzen ebenfalls berührungs- und kreuzungsfrei auf der Abziehwalze an. Danach können die Glasfasern gebündelt und konfektioniert werden, so dass Faserbündel beziehungsweise Faserkabel mit einer großen Anzahl an Glasfasern gleichzeitig hergestellt werden können.

Es wird erfindungsgemäß vorgeschlagen, dass die Ziehgeschwindigkeit der Abziehwalze und der Vorschub der Tragscheibe mittels einer elektronischen Datenverarbeitungsanlage geregelt werden. Außerdem ist vorgesehen, dass die Temperaturen in den Heizbuchsen mittels der elektronischen Datenverarbeitungsanlage geregelt werden. Schließlich ist erfindungsgemäß vorgesehen, dass die Glasfasern rückwirkungsfrei konfektioniert werden. Vorzugsweise werden die Glasfasern mittels einer Nebenrolle um die Abziehwalze geführt, um eine möglichst große Abziehreibung auf der Walzenoberfläche zu erhalten. Von der Nebenrolle werden die Glasfasern an die rückwirkungsfreie Konfektioniervorrichtung geführt, womit verhindert wird, dass beim Konfektionieren Kräfte auf mehrere oder einzelne Glasfasern ausgeübt werden, welche die Konstanz der Ziehgeschwindigkeit und damit die Durchmessergenauigkeit in Frage stellen.

Schließlich ist es in vorteilhafter Weise möglich Heizbuchsen mit den diesbezüglich vorbeschriebenen Merkmalen in Faseröfen der erfindungsgemäßen Vorrichtung und bei dem erfindungsgemäßen Verfahren einzusetzen, wobei insbesondere Heizbuchsen Verwendung finden sollen, die Mittel zur Einzelregelung der Heizbuchseninnentemperatur und Mess- und Ausgleichsmittel zum Abstimmen der Temperaturen der Heizbuchse relativ zu benachbarten Heizbuchsen aufweisen. Vorteilhaft haben sich Heizbuchsen gezeigt, die zumindest ein Heizelement, vorzugsweise mehrere gesondert ansteuerbare Heizwendeln, aufweisen, wobei zwischen dem Heizelement und der Preform zumindest ein Diffusor zum Streuen der Heizstrahlung angeordnet ist. Weiter werden Heizbuchsen eingesetzt, wobei der Diffusor vorzugsweise ein Quarzrohr umfasst, durch das eine Preform führbar ist. Es ist außerdem vorteilhaft, Heizbuchsen zu verwenden, die Strömungsmittel zur Erzeugung einer laminaren Luftströmung in jeder Heizbuchse aufweisen. Dabei können die Strömungsmittel eine vorzugsweise einstückig mit dem Diffusor verbundene im unteren Teil der Heizbuchse angeordnete Verlängerung umfassen, welche frei von Heizelementen ist, beziehungsweise zumindest eine Strömungsblende am oberen Ende der Heizbuchsen umfassen, welche für den Luftabzug einen Ringspalt mit vorbestimmter Spaltbreite um die Preformen gewährleistet.

Die Erfindung wird im Folgenden anhand der Zeichnung erläutert. Es zeigen
- Figur 1: eine Skizze der erfindungsgemäßen Vorrichtung;
- Figur 2: den Faserofen in einer Draufsicht von oben mit der erfindungsgemäßen Anordnung der Heizbuchsen;
- Figur 3: eine Heizbuchse im Querschnitt durch die Längsachse;
- Figur 4: eine Heizbuchse nach Fig. 3 beim Ziehen einer Preform.

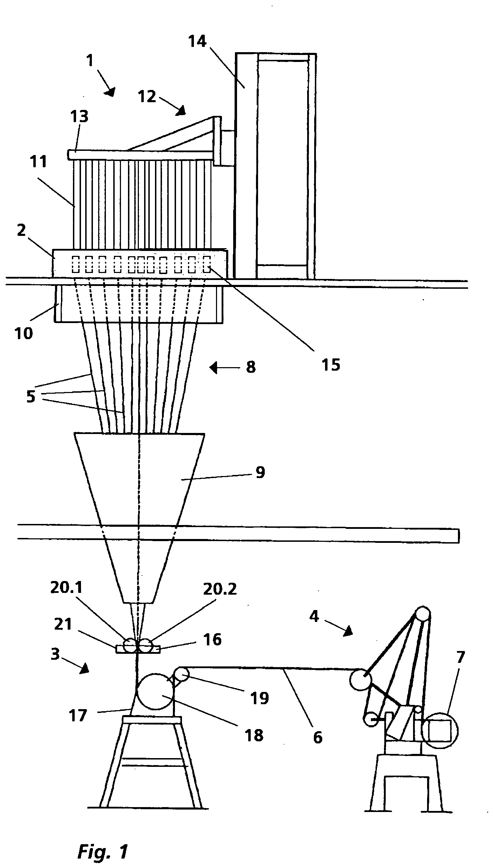

In Figur 1 ist die erfindungsgemäße Vorrichtung 1 mit dem Faserofen 2 und einer Zieh- und Beschlichtungsanlage 3 dargestellt. Der Zieh- und Beschlichtungsanlage 3 ist eine Konfektioniervorrichtung 4 nachgeordnet, welche rückwirkungsfrei die hergestellten Glasfasern 5 als Faserbündel 6 auf Aufwickelspulen 7 konfektioniert.

Zwischen dem Faserofen 2 und der Beschlichtungsanlage 3 ist die Kühlstrecke 8 zwischengeordnet, wobei die Glasfasern 5 durch einen Trichter 9 hindurchgeführt werden. Die Kühlstrecke 8 weist einen dem Faserofen 2 unmittelbar nachgeordneten Strömungskragen 10 auf, welcher dazu dient, dass die Glasfasern 5 mit einem vorbestimmten Temperaturprofil abgekühlt werden.

Die Glasfasern 5 werden von Preformen 11 abgezogen, wobei die Preformen mittels einer Nachführvorrichtung 12 in den Faserofen 2 eingeführt werden. Dazu werden die einzelnen Preformen 11 an einer Tragscheibe 13 der Nachführvorrichtung 12 befestigt. Die Tragscheibe 13 ist in einer Führung 14 mittels einer in der Figur 1 nicht dargestellten Getriebespindel, vorzugsweise mittels einer Kugelumlaufspindel, geführt und wird von einem Getriebemotor angetrieben. Dabei wird die Tragscheibe 13 beim normalen Nachführen der Preformen 11 mit dem für das Ziehen vorgesehenen Vorschub angetrieben. Wird das Ziehen der Glasfasern 5 beendet, kann die Tragscheibe 13 manuell oder, beispielsweise am Ende der Preformen 11, auch automatisch wieder in eine Bedienposition gefahren werden, in welcher die Preformreste entnommen und neue Preformen 11 an der Tragscheibe 13 befestigt werden können.

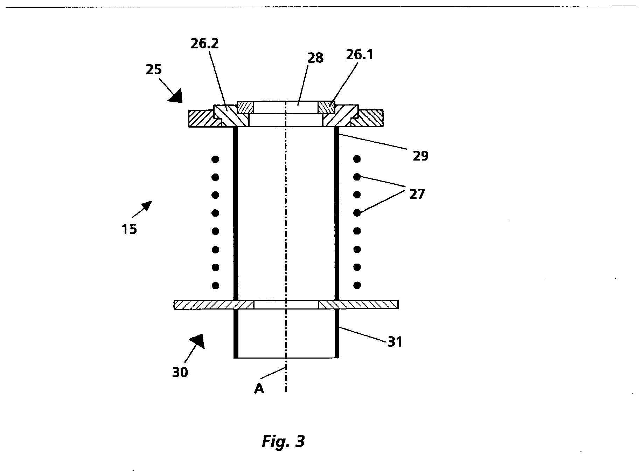

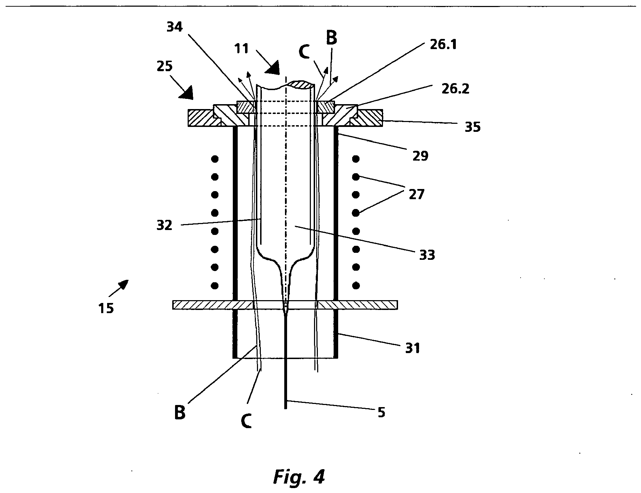

Der Faserofen 2 weist eine Vielzahl von Heizbuchsen 15 auf, welche in Figur 3 und 4 näher erläutert werden. Die Preformen 11 werden von der Nachführvorrichtung 12 in einer Weise in die Heizbuchsen 15 eingeführt, dass die Glasfasern 5 kontinuierlich über die Beschlichtungsanlage 16 von der Ziehanlage 17 zur Konfektioniervorrichtung 4 geführt werden können. Die Ziehanlage 17 weist hierzu eine Abziehwalze 18 auf, wobei die Glasfasern 5 von einer Nebenrolle 19 berührungsfrei nebeneinander liegend um die Abziehwalze 18 geführt werden, so dass die Glasfasern 5 von der Abziehwalze 18 mit gleicher Ziehgeschwindigkeit gezogen werden. So kann die Haftreibung der Glasfasern 5 an der Abziehwalze 18 optimal gehalten werden und es werden alle Glasfasern 5 mit weitgehend identischer Ziehgeschwindigkeit aus den Heizbuchsen 15 des Faserofens 2 gezogen.

Eine elektronische Datenverarbeitungsanlage regelt dabei den Ziehvorgang entsprechend in Abhängigkeit vom Vorschub der Nachführvorrichtung 12 und der Ziehgeschwindigkeit. Die Konfektioniervorrichtung 4 stellt sich selbsttätig auf die von der Abziehwalze 18 vorgegebene Geschwindigkeit ein, mit welcher das Faserbündel 6 aufgewickelt werden kann.

Die Glasfasern 5 werden vor der Abziehwalze 18 durch die Beschlichtungsanlage 16 gezogen. Dabei werden die Glasfasern 5 bandartig nebeneinander angeordnet von zwei Schlichtewalzen 20.1, 20.2 aufgenommen. Es ist vorgesehen, dass die Glasfasern 5 jeweils einer Hälfte des Faserofens 2 über eine der Schlichtewalzen 20.1, 20.2 geführt werden. Die Schlichtewalzen 20.1, 20.2 sind teilweise, d.h. bis zu 45% in einen Vorratsbehälter 21 eingetaucht. Die Glasfasern 5 werden über die Oberfläche der Schlichtewalzen 20.1, 20.2 gleichmäßig mit Schlichtemittel benetzt. Anschließend werden die Glasfasern 5, weiterhin bandartig nebeneinander angeordnet, von der Abziehwalze 18 aufgenommen.

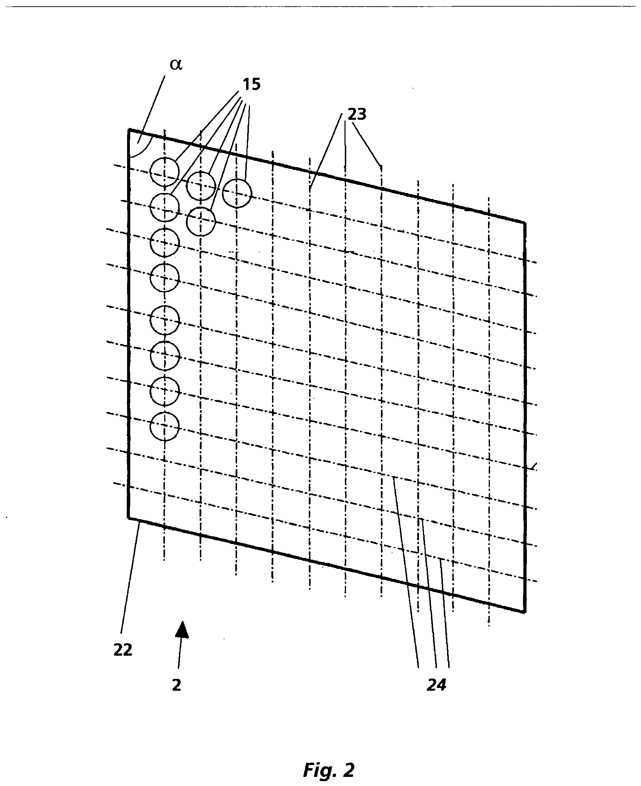

In Figur 2 ist der Faserofen 2 mit der erfindungsgemäß vorgesehenen Anordnung der Heizbuchsen 15 dargestellt. Die Heizbuchsen 15 sind in einer Ebene in Form einer Matrix 22 angeordnet. Die Matrix 22 weist winklig zueinander angeordnete Matrixachsen 23, 24 auf, auf deren Kreuzungspunkten die Heizbuchsen 15 angeordnet sind. In jeder Richtung der Matrixachsen 23, 24 sind die benachbarten Heizbuchsen 15 mit dem gleichen Abstand zueinander angeordnet. Die Matrixachsen 23, 24 sind mit einem vorbestimmten Winkel α zueinander angeordnet. Der Winkel α wird erfindungsgemäß kleiner als 90° gewählt.

In einer vorteilhaften Ausführungsform weist der Faserofen 2 eine Matrixstruktur von 10 X 11 mit insgesamt 110 Heizbuchsen 15 auf. Dabei werden jeweils die Hälfte der von den Preformen 11 gezogenen Glasfasern 5 über eine in der Figur 2 nicht dargestellte Schlichtewalze 20.1, 20.2 geführt. Die Schlichtewalzen 20.1, 20.2 sind dabei in einem vorbestimmten Winkel zu der korrespondierenden Matrixhauptachse angeordnet, um einen optimalen Abstand der Glasfasern 5 auf der Schlichtewalze 20.1, 20.2 zu gewährleisten.

In Figur 3 ist eine Heizbuchse 15 im Querschnitt zur Längsachse A dargestellt. Die Heizbuchse 15 weist am oberen Ende 25 eine innere und äußere Strömungsblenden 26.1, 26.2 auf, mit denen innerhalb der Heizbuchse 15 eine laminare Luftströmung beim Schmelzvorgang herstellbar ist. Die Heizbuchse 15 weist des Weiteren Heizelemente 27 auf, welche elektrisch betrieben werden. Die Heizelemente 27 sind als Heizwendeln um die Durchführung 28 angeordnet, durch welche die in der Figur 3 nicht dargestellte Preform 11 führbar ist. Mittels eines als Quarzrohr ausgebildeten Diffusors 29 wird die Heizwendel 27 gegenüber der Preform 11 abgedeckt. Am unteren Ende 30 der Heizbuchse 15 ist eine Verlängerung 31 angeordnet, welche als Strömungskragen wirkt. Mit der Verlängerung 31 ist es möglich ein vorbestimmtes Temperaturprofil für den Abkühlvorgang der Glasfasern 5 nach dem Schmelzen zu erreichen. Die Verlängerung 31 kann dabei einstückig mit dem Quarzglas hergestellt sein. Als zweckmäßig hat sich dabei auch eine gesonderte Kupferbuchse als Verlängerung 31 erwiesen.

In Figur 4 ist die Heizbuchse 15 mit einer eingeführten Preform 11 gezeigt. Die Preform 11 weist ein Mantelrohr 32 und einen Kernstab 33 auf. Die Preform 11 wird am oberen Ende 25 in die Heizbuchse 15 eingeführt.

Durch die Strömungsblenden 26.1, 26.2, welche in die obere Öffnung der Heizbuchse 15 um die Preform 11 eingelegt sind, wird zwischen der inneren Strömungsblende 26.1 und der Preform 11 ein Ringspalt 34 gebildet. Ansonsten ist die Öffnung durch die Strömungsblenden 26.1, 26.2 abgedeckt. Die durch die Heizwendeln 27 aufgeheizte Luft strömt somit entlang der Preform 11 in Pfeilrichtung B, C nach oben aus der Heizbuchse 15 heraus. Durch die Strömungsblenden 26.1, 26.2 wird erreicht, dass die Luftströmung laminar bleibt, das heißt, dass durch die Luftströmung keine unerwünschten Abkühleffekte auftreten beziehungsweise Turbulenzen innerhalb der Heizbuchse 15 erzeugt werden. Das Temperaturprofil kann jedoch innerhalb der Heizbuchse 15 gewollt verändert werden. Wobei der zwischen der äußeren Strömungsblende 26.2 und der Preform 11 entstehende Ringspalt 34 veränderbar ist, beispielsweise indem die innere Strömungsblende 26.1 entfernt wird. Damit wird erreicht, dass der Ringspalt größer wird. Dies führt dazu, dass mehr Luft an der Preform 11 vorbeigeführt und somit eine größere Wärmemenge aus der Heizbuchse 15 abgeführt wird, welche dem Schmelzvorgang dann nicht mehr zur Verfügung steht.

Es ist für die Einstellung eines Temperaturprofils innerhalb der Heizbuchse 15 vorgesehen, zusätzliche Kühlelemente einzusetzen, mittels denen Wärme der Heizwendeln 27 gesteuert abführbar ist. Die Kühlelemente können aus Metall, vorzugsweise aus Kupfer in das die Heizwendeln 27 tragende Material eingebettet sein. Die Kühlelemente sind im Übrigen in der Figur 4 nicht dargestellt.

Aus der Heizbuchse 15 wird das Glas in Form einer einen Fasermantel und einen Faserkern aufweisenden Glasfaser 5 gezogen und durch die Verlängerung 31 geführt, wo die Glasfaser 5 bereits in vorbestimmter Weise abgekühlt wird. Mittels der Länge der Verlängerung 31 kann ein gezieltes Temperaturprofil für den Abkühlvorgang eingestellt werden. Es ist auch möglich, durch besondere Maßnahmen für die Belüftung der Verlängerung 31 oder durch eine Anordnung oder Geometrie der Verlängerung 31 ein vorbestimmtes Temperaturprofil für den Abkühlvorgang der Glasfaser 5 einzustellen. Dabei wird in vorteilhafter Weise erreicht, dass durch die Verlängerung 31 eine bestimmte Luftströmung an der Glasfaser 5 erzeugt wird.

### Bezugszeichenliste

- 1: Vorrichtung
- 2: Faserofen
- 3: Zieh- und Beschlichtungsanlage
- 4: Konfektioniervorrichtung
- 5: Glasfaser
- 6: Faserbündel
- 7: Aufwickelspule
- 8: Kühlstrecke
- 9: Trichter
- 10: Strömungskragen
- 11: Preform
- 12: Nachführvorrichtung
- 13: Tragscheibe
- 14: Führung
- 15: Heizbuchse
- 16: Beschlichtungsanlage
- 17: Ziehanlage
- 18: Abziehwalze
- 19: Nebenrolle
- 20 .1: Schlichtewalze
- 20 .2: Schlichtewalze
- 21: Vorratsbehälter
- 22: Matrix
- 23: Matrixachse
- 24: Matrixachse
- 25: oberes Ende
- 26 .1: Strömungsblende
- 26 .2: Strömungsblende
- 27: Heizelement
- 28: Durchführung
- 29: Diffusor
- 30: unteres Ende
- 31: Verlängerung
- 32: Mantelrohr
- 33: Kernstab
- 34: Ringspalt
- α: Winkel

## Patentansprüche

1. Vorrichtung (1) zum Herstellen von optischen Glasfasern (5) aus Preformen (11), insbesondere von Mehrkomponentenglasfasern, mit einem Heizbuchsen (15) aufweisenden Faserofen (2), mit einer Nachführvorrichtung (12) zum Halten und Nachführen der Preformen (11) in den Heizbuchsen (15) und einer Zieh- und Beschlichtungsanlage (3) zum Weiterführen der Glasfasern (5) an eine Konfektioniervorrichtung (4),
**dadurch gekennzeichnet,**
**dass** die Heizbuchsen (15) im Faserofen (2) eine matrixartige Anordnung (22) zur gleichzeitigen Aufnahme mehrerer Preformen (11) aufweisen, dass die Matrixhauptachsen (23, 24) der Anordnung mit einem vorbestimmten Versatzwinkel (α) zueinander angeordnet sind, dass der Versatzwinkel der Matrixachsen α < 90° ist und dass die aus den Heizbuchsen (15) gezogenen Glasfasern (5) bandförmig nebeneinander liegend von der Zieh- und Beschlichtungsanlage (3) aufnehmbar sind.

2. Vorrichtung (1) nach Anspruch 1,
**dadurch gekennzeichnet,**
**dass** der Abstand zwischen den unmittelbar benachbarten Heizbuchsen (15) auf jeder Matrixachse (23, 24) gleich ist.

3. Vorrichtung (1) nach Anspruch 1 oder 2,
**dadurch gekennzeichnet,**
**dass** die Heizbuchsen (15) in einer Ebene angeordnet sind.

4. Vorrichtung (1) nach einem oder mehreren der Ansprüche 1 bis 3,
**dadurch gekennzeichnet,**
**dass** jedem von der Nachführvorrichtung (12) geführten Preformen (11) eine Heizbuchse (15) zugeordnet ist.

5. Vorrichtung (1) nach einem oder mehreren der Ansprüche 1 bis 4,
**dadurch gekennzeichnet,**
**dass** der Faserofen (2) eine Anzahl von wenigstens 110 Heizbuchsen (15) aufweist.

6. Vorrichtung (1) nach Anspruch 5,
**dadurch gekennzeichnet,**
**dass** die Matrixstruktur (22) 10 Heizbuchsen (15) in Richtung der einen Matrixhauptachse (23) und 11 Heizbuchsen (15) in Richtung der anderen Matrixhauptachse (24) aufweist.

7. Vorrichtung (1) nach einem oder mehreren der Ansprüche 1 bis 6,
**dadurch gekennzeichnet,**
**dass** der Faserofen (2) eine Temperaturregelung aufweist und dass die Temperaturregelung Einzelregelungen der Heizbuchseninnentemperatur umfasst.

8. Vorrichtung (1) nach einem oder mehreren der Ansprüche 1 bis 7,
**dadurch gekennzeichnet,**
**dass** die Einzelregelungen Mess- und Ausgleichsmittel zum Abstimmen der Temperaturen der Heizbuchsen (15) relativ zu den benachbarten Heizbuchsen (15) aufweisen.

9. Vorrichtung (1) nach einem oder mehreren der Ansprüche 1 bis 8,
**dadurch gekennzeichnet,**
**dass** jede Heizbuchse (15) zumindest ein Heizelement (27), vorzugsweise mehrere gesondert ansteuerbare Heizwendeln, aufweist und dass zwischen dem Heizelement (27) und der Preform (11) zumindest ein Diffusor (29) zum Streuen der Heizstrahlung angeordnet ist.

10. Vorrichtung (1) nach einem oder mehreren der Ansprüche 1 bis 9,
**dadurch gekennzeichnet,**
**dass** der Diffusor (29) vorzugsweise ein Quarzrohr umfasst und dass die Preform (11) von der Nachführvorrichtung (12) durch das Quarzglas führbar ist.

11. Vorrichtung (1) nach einem oder mehreren der Ansprüche 1 bis 10,
**dadurch gekennzeichnet,**
**dass** jede Heizbuchse (15) Strömungsmittel (26) zur Erzeugung einer laminaren Luftströmung in der Heizbuchse (15) aufweist.

12. Vorrichtung (1) nach Anspruch 11,
**dadurch gekennzeichnet,**
**dass** die Strömungsmittel (26) eine vorzugsweise einstückig mit dem Diffusor (29) verbundene im unteren Teil der Heizbuchse (15) angeordnete Verlängerung (31) umfassen, welche frei von Heizelementen (27) ist.

13. Vorrichtung (1) Anspruch 11 oder 12,
**dadurch gekennzeichnet,**
**dass** die Strömungsmittel (26) zumindest eine Strömungsblende (26.1, 26.2) am oberen Ende der Heizbuchsen (15) umfassen, welche für den Luftabzug einen Ringspalt (34) mit vorbestimmter Spaltbreite um die Preformen (11) gewährleistet.

14. Vorrichtung (1) nach einem oder mehreren der Ansprüche 1 bis 13,
**dadurch gekennzeichnet,**
**dass** die Nachführvorrichtung (12) eine Tragscheibe (13) mit Einzelaufhängungen zur Aufnahme der einzelnen Preformen (11) aufweist.

15. Vorrichtung (1) nach einem oder mehreren der Ansprüche 1 bis 14,
**dadurch gekennzeichnet,**
**dass** die Einzelaufhängungen an der Tragscheibe (13) eine mit der Heizbuchsenanordnung korrespondierende matrixartige Anordnung (22) aufweist.

16. Vorrichtung (1) nach einem oder mehreren der Ansprüche 1 bis 15,
**dadurch gekennzeichnet,**
**dass** jede Einzelaufhängung einen Vakuumanschluss zur Verbindung der Preform (11) an ein zentrales Vakuumsystem aufweist.

17. Vorrichtung (1) nach einem oder mehreren der Ansprüche 1 bis 16,
**dadurch gekennzeichnet,**
**dass** die Tragscheibe (13) für den Vorschub der Preformen (11) mittels Gewindespindel und Führung (14) von einem Getriebemotor antreibbar und bremsbar ist.

18. Vorrichtung (1) nach einem oder mehreren der Ansprüche 1 bis 17,
**dadurch gekennzeichnet,**
**dass** die Tragscheibe (13) manuell und/oder automatisch in eine Bedienposition verfahrbar ist.

19. Vorrichtung (1) nach einem oder mehreren der Ansprüche 1 bis 18,
**dadurch gekennzeichnet,**
**dass** der Faserofen (2) einen Strömungskragen (10) am ausgangsseitigen Ende (30) der Heizbuchsen (15) aufweist, mittels dem ein Luftpuffer für die verzögerte Abkühlung der Glasfasern (5) erzeugbar ist.

20. Vorrichtung (1) nach einem oder mehreren der Ansprüche 1 bis 19,
**dadurch gekennzeichnet,**
**dass** dem Faserofen (2) eine Kühlstrecke (8) zum Kühlen der Glasfasern (5) nachgeordnet ist.

21. Vorrichtung (1) nach einem oder mehreren der Ansprüche 1 bis 20,
**dadurch gekennzeichnet,**
**dass** die Kühlstrecke (8) einen Trichter (9) aufweist, durch den die Glasfasern (5) zur Zieh- und Beschlichtungsanlage (3) führbar sind.

22. Vorrichtung (1) nach einem oder mehreren der Ansprüche 1 bis 21,
**dadurch gekennzeichnet,**
**dass** die Glasfasern (5) jeder Ofenhälfte über je eine Schlichtewalze (20.1, 20.2) führbar sind.

23. Vorrichtung (1) nach einem oder mehreren der Ansprüche 1 bis 22,
**dadurch gekennzeichnet,**
**dass** die Schlichtewalzen (20.1, 20.2) in einem vorbestimmten Winkel (α) zu den Matrixhauptachsen (23, 24) angeordnet sind.

24. Verfahren zum Herstellen von Glasfasern (5) aus Preformen (11) mit einer Vorrichtung (1) nach einem oder mehreren der Ansprüche 1 bis 23, wobei die Preformen (11) mit einer Nachführvorrichtung (12) in die Heizbuchsen (15) des Faserofens (2) eingeführt werden und wobei die aus den Heizbuchsen (15) gezogenen Glasfasern (5) über eine nachgeordnete Kühlstrecke (8) gekühlt und über eine Ziehanlage (17) zu einer Konfektioniervorrichtung (4) weitergeführt werden,
**dadurch gekennzeichnet,**
**dass** die Glasfasern (5) mit einem vorbestimmten gleichbleibenden Durchmesser aus den Heizbuchsen (15) gezogen und über die Kühlstrecke (8) in vorbestimmter Weise gekühlt werden und dass mittels Anordnung der Heizbuchsen (15) ein berührungs- und kreuzungsfreies Ziehen der Glasfasern (5) gewährleistet wird.

25. Verfahren nach Anspruch 24,
**dadurch gekennzeichnet,**
**dass** jede Preform (11) mit einem geregelten Temperaturprofil in der zugeordneten Heizbuchse (15) und/oder Vorschub der Tragscheibe (13) gezogen wird.

26. Verfahren nach Anspruch 24 oder 25,
**dadurch gekennzeichnet,**
**dass** die aus den Heizbuchsen (15) gezogenen Glasfasern (5) über ein vorbestimmtes Temperaturprofil gekühlt werden.

27. Verfahren nach einem oder mehreren der Ansprüche 24 bis 26,
**dadurch gekennzeichnet,**
**dass** die Glasfasern (5) bandartig auf nachgeordneten Schlichtewalzen (20.1, 20.2) einer Beschlichtungsanlage (16) gleichmäßig mit Schlichtemittel benetzt werden.

28. Verfahren nach einem oder mehreren der Ansprüche 24 bis 27,
**dadurch gekennzeichnet,**
**dass** die Glasfasern (5) von einer Abziehwalze(18) mit gleicher Ziehgeschwindigkeit gezogen werden.

29. Verfahren nach einem oder mehreren der Ansprüche 24 bis 28,
**dadurch gekennzeichnet,**
**dass** die Ziehgeschwindigkeit der Abziehwalze (18) und der Vorschub der Tragscheibe (13) mittels einer elektronischen Datenverarbeitungsanlage geregelt werden.

30. Verfahren nach einem oder mehreren der Ansprüche 24 bis 29,
**dadurch gekennzeichnet,**
**dass** die Temperaturen in den Heizbuchsen (15) mittels der elektronischen Datenverarbeitungsanlage geregelt werden.

31. Verfahren nach einem oder mehreren der Ansprüche 24 bis 30,
**dadurch gekennzeichnet,**
**dass** die Glasfasern (5) rückwirkungsfrei konfektioniert werden.

## Claims

1. Device (1) for making optical glass fibers (5) from preforms (11), in particular multicomponent glass fibers, having a fiber furnace (2) which has heating bushes (15), having a tracking device (12) for holding and tracking the preforms (11) in the heating bushes (15), and having a drawing and sizing installation (3) for forwarding the glass fibers (5) to a finishing device (4),
**characterized in**
the heating bushes (15) in the fiber furnace (2) have a matrix-like arrangement (22) for simultaneously accommodating a plurality of preforms (11), the matrix main axes (23, 24) of the arrangement are arranged with a predetermined offset angle (α) with respect to one another, the offset angle of the matrix axes α is smaller than 90°, and the glass fibers (5) drawn from the heating bushes (15) are receivable by the drawing and sizing installation (3) in the form of a band lying next to one another.

2. Device (1) according to claim 1,
**characterized in**
**that** the distance between the directly adjacent heating bushes (15) on each matrix axis (23, 24) is the same.

3. Device (1) according to claim 1 or 2,
**characterized in**
**that** the heating bushes (15) are arranged in a plane.

4. Device (1) according to one or more of claims 1 to 3,
**characterized in**
**that** a heating bush (15) is assigned to each preform (11) guided by the tracking device (12).

5. Device (1) according to one or more of claims 1 to 4,
**characterized in**
**that** the fiber furnace (2) has a number of at least 110 heating bushes (15).

6. Device (1) according to claim 5,
**characterized in**
**that** the matrix structure (22) has 10 heating bushes (15) in the direction of one matrix main axis (23) and 11 heating bushes (15) in the direction of the other matrix main axis (24).

7. Device (1) according to one or more of claims 1 to 6,
**characterized in**
**that** the fiber furnace (2) has a temperature control and the temperature control comprises individual controls of the internal temperature of the heating bushes.

8. Device (1) according to one or more of claims 1 to 7,
**characterized in**
**that** the individual controls have measuring and compensating means for adjusting the temperatures of the heating bushes (15) relative to the adjacent heating bushes (15).

9. Device (1) according to one or more of claims 1 to 8,
**characterized in**
**that** each heating socket (15) has at least one heating element (27), preferably a plurality of separately controllable heating coils, and at least one diffuser (29) for scattering the heating radiation is arranged between the heating element (27) and the preform (11).

10. Device (1) according to one or more of claims 1 to 9,
**characterized in**
**that** the diffuser (29) preferably comprises a quartz tube and the preform (11) can be guided through the quartz glass by the tracking device (12).

11. Device (1) according to one or more of claims 1 to 10,
**characterized in**
each heating bush (15) has flow means (26) for generating a laminar air flow in the heating bush (15).

12. Device (1) according to claim 11,
**characterized in**
**that** the flow means (26) comprise an extension (31) which is arranged preferably integrally with the diffuser (29) in the lower part of the heating bush (15) and is free of heating elements (27).

13. Device (1) according to claim 11 or 12,
**characterized in**
**that** the flow means (26) comprise at least one flow orifice (26.1, 26.2) at the upper end of the heating bushes (15), which, for the air outlet, ensures an annular gap (34) with a predetermined gap width around the preforms (11).

14. Device (1) according to one or more of claims 1 to 13,
**characterized in**
**that** the tracking device (12) has a supporting disc (13) with individual suspensions for receiving the individual preforms (11).

15. Device (1) according to one or more of claims 1 to 14,
**characterized in**
**that** the individual suspensions on the supporting disc (13) have a matrix-like arrangement (22) corresponding to the heating bush arrangement.

16. Device (1) according to one or more of claims 1 to 15,
**characterized in**
**that** each individual suspension has a vacuum connection for connecting the preform (11) to a central vacuum system.

17. Device (1) according to one or more of claims 1 to 16,
**characterized in**
**that** the supporting disc (13) for advancing the preforms (11) can be driven and decelerated by a geared motor by means of a threaded spindle and guide (14).

18. Device (1) according to one or more of claims 1 to 17,
**characterized in**
**that** the supporting disc (13) can be moved manually and/or automatically into an operating position.

19. Device (1) according to one or more of claims 1 to 18,
**characterized in**
**that** the fiber furnace (2) has a flow collar (10) at the outlet end (30) of the heating bushes (15), by means of which an air buffer for the delayed cooling of the glass fibers (5) can be produced.

20. Device (1) according to one or more of claims 1 to 19,
**characterized in**
**that** a cooling section (8) for cooling the glass fibers (5) is arranged downstream of the fiber furnace (2).

21. Device (1) according to one or more of claims 1 to 20,
**characterized in**
**that** the cooling section (8) has a funnel (9) through which the optical fibers (5) can be guided to the drawing and sizing installation (3).

22. Device (1) according to one or more of claims 1 to 21,
**characterized in**
**that** the glass fibers (5) of each furnace half can each be guided over a sizing roller (20.1, 20.2).

23. Device (1) according to one or more of Claims 1 to 22,
**characterized in**
**that** the size rollers (20.1, 20.2) are arranged at a predetermined angle (α) to the matrix main axes (23, 24).

24. Method for making glass fibers (5) from preforms (11) with a device (1) according to one or more of claims 1 to 23, wherein the preforms (11) are introduced with a tracking device (12) into the heating bushes (15) of the fiber furnace (2), and wherein the glass fibers (5) drawn from the heating bushes (15) are cooled by means of a downstream cooling section (8) and are conveyed by means of a drawing installation (17) to a finishing device (4),
**characterized in**
**that** the glass fibers (5) are drawn with a predetermined constant diameter from the heating bushes (15) and cooled over the cooling section (8) in a predetermined manner, and that the arrangement of the heating bushes (15) ensures that the glass fibers (5) are drawn without contact or crossing.

25. Method according to claim 24,
**characterized in**
**that** each preform (11) with a controlled temperature profile is drawn in the associated heating bush (15) and/or feed of the supporting disc (13).

26. Method according to claim 24 or 25, **characterized in that** the glass fibers (5) drawn from the heating bushes (15) are cooled through a predetermined temperature profile.

27. Method according to one or more of claims 24 to 26,
**characterized in**
**that** the glass fibers (5) are uniformly wetted with sizing agent in a band-like manner on sizing rollers (20.1, 20.2) arranged downstream of a sizing installation (16).

28. Method according to one or more of claims 24 to 27, **characterized in that** the glass fibers (5) are drawn by a drawing roller (18) at the same drawing speed.

29. Method according to one or more of claims 24 to 28,
**characterized in**
**that** the drawing speed of the drawing roller (18) and the feed rate of the carrier disc (13) are controlled by means of an electronic data processing system.

30. Method according to one or more of claims 24 to 29,
**characterized in**
**that** the temperatures in the heating bushes (15) are controlled by means of the electronic data processing system.

31. Method according to one or more of the claims 24 to 30,
**characterized in**
**that** the glass fibers (5) are assembled without retroactive effects.

## Revendications

1. Dispositif (1) de fabrication de fibres optiques en verre (5) à partir de préformes (11), en particulier de fibres de verre à plusieurs composants, comprenant un four à fibres (2) qui présente des douilles chauffantes (15), un dispositif de poursuite (12) pour maintenir et suivre les préformes (11) dans les douilles chauffantes (15) et une installation (3) pour étirer et mouiller les fibres (5) en verre vers un appareil de finition (4),
**caractérisé**
**en ce que** la douille chauffante (15) dans le four à fibres (2) comportent un agencement en forme de matrice (22) pour recevoir simultanément plusieurs préformes (11), **en ce que** les axes principaux de matrice (23, 24) de l'agencement sont disposés les uns par rapport aux autres avec un angle de décalage prédéterminé (a), **en ce que** l'angle de décalage des axes de matrice α est < 90° et que les fibres optiques (5) tirées des douilles chauffantes (15) peuvent être reçues par la installation (3) pour étirer et mouiller les fibres (5) sous la forme d'une bande disposée les unes à côté des autres.

2. Dispositif (1) selon la revendication 1,
**caractérisé**
**en ce que** la distance entre les douilles chauffantes (15) immédiatement adjacentes est la même sur chaque axe de matrice (23, 24).

3. Dispositif (1) selon la revendication 1 ou 2,
**caractérisé**
**en ce que** les douilles chauffantes (15) sont disposées dans un plan.

4. Dispositif (1) selon une ou plusieurs des revendications 1 à 3,
**caractérisé**
**en ce qu'**une douille chauffante (15) est affectée à chaque préforme (11) guidée par le dispositif de poursuite (12).

5. Dispositif (1) selon une ou plusieurs des revendications 1 à 4,
**caractérisé**
**en ce que** le four à fibres (2) présente un nombre d'au moins 110 douilles chauffantes (15).

6. Dispositif (1) selon la revendication 5,
**caractérisé**
**en ce que** la structure matricielle (22) comporte 10 douilles chauffantes (15) dans la direction d'un axe principal de matrice (23) et 11 douilles chauffantes (15) dans la direction de l'autre axe principal de matrice (24).

7. Dispositif (1) selon une ou plusieurs des revendications 1 à 6,
**caractérisé**
**en ce que** le four à fibres (2) présente une régulation de température et **en ce que** la régulation de température comprend des asservissements individuels de la température intérieure de la douille chauffante (15).

8. Dispositif (1) selon une ou plusieurs des revendications 1 à 7,
**caractérisé**
**en ce que** les asservissements individuels comprennent des moyens de mesure et de compensation pour régler les températures des douilles chauffantes (15) par rapport aux douilles chauffantes (15) voisines.

9. Dispositif (1) selon une ou plusieurs des revendications 1 à 8,
**caractérisé**
**en ce que** chaque douille chauffante (15) présente au moins un élément chauffant (27), de préférence plusieurs serpentins chauffants pouvant être commandés séparément, et **en ce qu'**entre l'élément chauffant (27) et la préforme (11) est disposé au moins un diffuseur (29) pour diffuser le rayonnement thermique.

10. Dispositif (1) selon une ou plusieurs des revendications 1 à 9,
**caractérisé**
**en ce que** le diffuseur (29) comprend de préférence un tube de quartz et **en ce que** la préforme (11) peut être guidée à travers le verre de quartz par le dispositif de poursuite (12).

11. Dispositif (1) selon une ou plusieurs des revendications 1 à 10,
**caractérisé**
**en ce que** chaque douille chauffante (15) comprend des moyens d'écoulement (26) pour générer un flux d'air laminaire dans la douille chauffante (15).

12. Dispositif (1) selon la revendication 11,
**caractérisé**
**en ce que** les moyens d'écoulement (26) comprennent un prolongement (31) qui est de préférence relié d'une seule pièce au diffuseur (29) et qui est disposé dans la partie inférieure de la douille chauffante (15) et est exempt d'éléments chauffants (27).

13. Dispositif (1) selon la revendication 11 ou 12,
**caractérisé**
**en ce que** les moyens d'écoulement (26) comprennent au moins un orifice d'écoulement (26.1, 26.2) à l'extrémité supérieure des bagues chauffantes (15), qui assure un espace annulaire (34) avec une largeur d'espace prédéterminée autour des préformes (11) pour une extraction d'air.

14. Dispositif (1) selon une ou plusieurs des revendications 1 à 13,
**caractérisé**
**en ce que** le dispositif de poursuite (12) présente un disque de support (13) avec des suspensions individuelles pour recevoir les préformes individuelles (11).

15. Dispositif (1) selon une ou plusieurs des revendications 1 à 14,
**caractérisé**
**en ce que** les suspensions individuelles sur le disque de support (13) comportent un agencement en forme de matrice (22) correspondant à l'agencement de douille chauffante (15).

16. Dispositif (1) selon une ou plusieurs des revendications 1 à 15,
**caractérisé**
**en ce que** chaque suspension individuelle présente un raccord de vide pour relier la préforme (11) à un système de vacuum central.

17. Dispositif (1) selon une ou plusieurs des revendications 1 à 16,
**caractérisé**
**en ce que** le disque de support (13) pour l'avancement des préformes (11) peut être entraîné et freiné par un motoréducteur au moyen d'une broche filetée et d'un guide (14).

18. Dispositif (1) selon une ou plusieurs des revendications 1 à 17,
**caractérisé**
**en ce que** le disque de support (13) peut être déplacé manuellement et/ou automatiquement dans une position de fonctionnement.

19. Dispositif (1) selon une ou plusieurs des revendications 1 à 18,
**caractérisé**
**en ce que** le four à fibres (2) présente à l'extrémité de sortie (30) des douilles de chauffage (15) un collet (10) permettant de produire un tampon à air pour le refroidissement retardé des fibres (5) de verre.

20. Dispositif (1) selon une ou plusieurs des revendications 1 à 19,
**caractérisé**
**en ce qu'**une section de refroidissement (8) pour refroidir les fibres de verre (5) est disposée en aval du four à fibres (2).

21. Dispositif (1) selon une ou plusieurs des revendications 1 à 20,
**caractérisé**
**en ce que** la section de refroidissement (8) présente un entonnoir (9) à travers lequel les fibres optiques (5) peuvent être guidées vers l'installation (3) pour étirer et mouiller les fibres (5).

22. Dispositif (1) selon une ou plusieurs des revendications 1 à 21,
**caractérisé**
**en ce que** les fibres de verre (5) de chaque moitié de four peuvent être guidées chacune sur un rouleau de mouillage (20.1, 20.2).

23. Dispositif (1) selon une ou plusieurs des revendications 1 à 22,
**caractérisé**
**en ce que** les rouleaux de mouillage (20.1, 20.2) sont disposés selon un angle prédéterminé (α) par rapport aux axes principaux (23, 24) de la matrice.

24. Procédé de fabrication de fibres de verre (5) à partir de préformes (11) avec un dispositif (1) selon une ou plusieurs des revendications 1 à 23, dans lequel les préformes (11) sont introduites avec un dispositif de poursuite (12) dans les douilles chauffantes (15) du four à fibres (2) et les fibres de verre (5) tirées des douilles chauffantes (15) sont refroidies par une section de refroidissement aval (8) et sont transmises à un dispositif de finition (4) via une installation de tirage (17),
**caractérisé**
**en ce que** les fibres de verre (5) sont tirées des douilles chauffantes (15) avec un diamètre constant prédéterminé et sont refroidies d'une manière prédéterminée sur la section de refroidissement (8), et **en ce que** la disposition des douilles chauffantes (15) assure que les fibres de verre (5) sont tirées sans agitation ni croisement.

25. Procédé selon la revendication 24,
**caractérisé**
**en ce que** chaque préforme (11) est tirée dans la douille chauffante (15) avec un profil de température contrôlé et/ou une avance du disque de support (13).

26. Procédé selon la revendication 24 ou 25,
**caractérisé**
**en ce que** les fibres de verre (5) tirées des douilles chauffantes (15) sont refroidies sur un profil de température prédéterminé.

27. Procédé selon une ou plusieurs des revendications 24 à 26,
**caractérisé**
**en ce que** les fibres de verre (5), sont mouillées uniformément en forme de bande avec un agent d'encollage sur des rouleaux de mouillage (20.1, 20.2) subséquentes d'une unité de encollage (16).

28. Procédé selon l'une ou plusieurs des revendications 24 à 27,
**caractérisé**
**en ce que** les fibres de verre (5) sont étirées par un rouleau d'étirage (18) à la même vitesse.

29. Procédé selon l'une ou plusieurs des revendications 24 à 28,
**caractérisé**
**en ce que** la vitesse d'étirage du rouleau d'étirage (18) et l'avance du disque de support (13) sont commandées au moyen d'un système électronique de traitement de données.

30. Procédé selon une ou plusieurs des revendications 24 à 29,
**caractérisé**
**en ce que** les températures dans les douilles chauffants (15) sont commandées au moyen du système électronique de traitement de données.

31. Procédé selon une ou plusieurs des revendications 24 à 30,
**caractérisé**
**en ce que** les fibres de verre (5) sont assemblées sans rétroaction.
